# EUROPÄISCHE PATENTSCHRIFT

(11) **EP 2 521 845 B1**
(45) Veröffentlichungstag und Bekanntmachung des Hinweises auf die Patenterteilung: **14.03.2018**
(21) Anmeldenummer: 10790640.6
(22) Anmeldetag: 08.12.2010
(51) Int. Cl.: F01P 7/16

(54) **THERMOSTATEINSATZ MIT GRUNDKÖRPER**
THERMOSTAT INSERT HAVING A BASE BODY
INSERT THERMOSTATIQUE MUNI D'UN CORPS DE BASE

(30) Priorität: 07.01.2010 DE 102010004441
(43) Veröffentlichungstag der Anmeldung: 14.11.2012
(73) Patentinhaber: MAHLE Behr Kornwestheim GmbH, 70806 Kornwestheim (DE)
(72) Erfinder: AUWEDER, Andreas, 71665 Vaihingen/Enz (DE); BUSCHATZ, Immanuel, 72669 Unterensingen (DE)
(74) Vertreter: Grauel, Andreas
(86) Internationale Anmeldenummer: PCT/EP2010/069225
(87) Internationale Veröffentlichungsnummer: WO 2011/082928

(56) Entgegenhaltungen:
- EP-A2- 0 881 418
- EP-A2- 0 985 808
- DE-A1- 2 503 946
- DE-A1- 10 261 039
- DE-U- 7 235 849
- DE-U1- 9 306 742
- FR-A1- 2 456 838
- FR-A5- 2 127 707
- JP-A- S5 882 013

## Beschreibung

Die Erfindung betrifft einen Thermostateinsatz mit einem thermostatischen Arbeitselement und mit einem Grundkörper. Die Erfindung betrifft weiter ein Verfahren zur Herstellung eines Thermostateinsatzes und einen Integralthermostat.

Aus DE 94 12 727 U1 oder DE 23 14 301 C3 sind Thermostateinsätze mit einem thermostatischen Arbeitselement und einem zwischen einem Flansch eines Deckels und einem Gehäuse angeordneten, ringförmigen Grundkörper, der einen Ventilsitz für einen Ventilteller bildet, bekannt. Ein mit dem Ventilsitz zusammenwirkender Ventilteller ist an einem Gehäuse eines thermostatischen Arbeitselements gehalten. Ein Arbeitskolben des thermostatischen Arbeitselements ist stationär an einem Querbügel des Grundkörpers abgestützt. Weiter ist an dem Grundkörper mittels zwei oder mehreren Armen ein Führungsteil gehalten, in welchem das Gehäuse des thermostatischen Arbeitselements bei einer Hubbewegung geführt ist. An dem Führungsteil stützt sich eine Schließ- oder Rückstellfeder ab, die den Ventilteller in Schließrichtung belastet. Der Grundkörper, das Führungsteil einschließlich der Arme sowie der Ventilteller sind als Blechpressteile hergestellt. Der Grundkörper ist mit den Armen des Führungsteils vernietet.

Zum Herstellen des Grundkörpers und des Führungsteils sind mehrere Stanzwerkzeuge notwendig und die einzelnen Bauteile sind logistisch zu verwalten. Die getrennte Herstellung der einzelnen Bauteile führt insgesamt zu höheren Taktzeiten bei der Herstellung und somit auch zu erhöhten Herstellkosten. Im Bereich einer Vernietung der Bauteile entsteht an dem Grundkörper ein Undefinierter, erhabener, teilweise scharfkantiger Bereich, welcher nicht als Dichtfläche für eine Dichtung beispielsweise einen O-Ring oder eine Anbringung am Deckel verwendet werden kann. Ein Vernieten der Bauteile erfolgt nach einer Montage des thermostatischen Arbeitselements zusammen mit einem Ventilteller und der Rückstellfeder, wobei für die Montage und das Vernieten ein Zugriff auf die Bauteile von zwei Richtungen notwendig ist.

Die Vernietung lässt sich nicht zerstörungsfrei lösen, so dass für einen eventuell notwendigen Zugriff auf das thermostatische Arbeitselement, beispielsweise für einen Austausch eines eingesetzten Dehnstoffs oder dergleichen, das Führungsteil und/oder die Arme zerstört werden muss. Bei unsachgemäßer Vernietung besteht weiter die Gefahr, dass ein Riss oder ein Bruch an der Stelle der Vernietung entsteht.

Aus der WO 90/06465 ist ein Thermostatventil zum Mischen von heißem und kalten Wasser bekannt, wobei für einen Kaltwassereinlass und einen Warmwassereinlass jeweils ein Regelelement vorgesehen ist. In einem Gehäuse des Thermostatventils ist ein hülsenförmiger Einsatz vorgesehen, in welchem ein thermostatisches Arbeitselement gelagert ist. Der hülsenförmige Einsatz ist vorzugsweise aus Kunststoff gefertigt, so dass der hülsenförmige Einsatz durch Rastverbindungen in einem Gehäuse anbringbar ist.

Aus dem Stand der Technik sind weiter sogenannte Integralthermostaten bekannt, welche einen Gehäusedeckel mit einem kegelförmigen Zapfen aufweisen, wobei ein Grundkörper und ein mit dem Grundkörper verbundenes Führungselement auf den Zapfen aufgepresst sind.

Die FR 2 456 838 A1 offenbart ein Verfahren gemäß dem Oberbegriff von Anspruch 1 und einen Thermostateinsatz nach dem Oberbegriff von Anspruch 5.

Es ist Aufgabe der vorliegenden Erfindung, einen Thermostateinsatz zu schaffen, durch welchen eine gute Führung bewegter Teile eines thermostatischen Arbeitselements bei einer Hubfunktion gegeben ist, welcher kostengünstig herstellbar ist und welcher eine gute und kostengünstige Montage eines entsprechenden Integralthermostaten erlaubt. Es ist weiter Aufgabe der Erfindung, ein Verfahren zu dessen Herstellung zu schaffen.

Die Aufgabe wird zu dem Verfahren mit den Merkmalen von Anspruch 1 gelöst. Die Aufgabe wird zu dem Thermostateinsatz mit den Merkmalen von Anspruch 5 gelöst.

Als einteilige Herstellung wird im Zusammenhang mit der Erfindung eine Herstellung beispielsweise durch Urformen, Umformen und/oder Trennen bezeichnet, welche ohne Verbindungsprozess für ein Kraft-, Form- und/oder Stoffschluss einzelner Bauteile durchgeführt wird. In anderen Worten werden die Grundplatte und die Führungsarme in einem gemeinsamen Fertigungsprozess hergestellt. Durch die einteilige Herstellung sind die Taktzeiten, welche beim Herstellen mehrerer Bauteile notwendig sind, verringerbar. Die von der Grundplatte abragenden Führungsarme sind vorzugsweise verformbar, insbesondere elastisch verformbar. Dadurch ist es möglich, ein thermostatisches Arbeitselement zusammen mit einem Ventilteller zwischen mehrere, käfigförmig angeordnete Führungsarme einzusetzen und die Führungsarme anschließend in eine Gebrauchsposition zu bringen, in welcher sie zumindest teilweise an dem thermostatischen Arbeitselement anliegen. Durch die einteilige Herstellung entfallen Verbindungsprozesse. Der Grundkörper wird in anderen Worten in einem Arbeitsgang hergestellt, so dass eine schnellere Fertigung möglich ist.

In einer erfindungsgemäßen Ausgestaltung wird der Grundkörper als Kunststoffspritzgussteil hergestellt. Je nach Anforderungen ist durch die Fertigung aus Kunststoff ein besonders kostengünstiger Grundkörper herstellbar.

Vorzugsweise werden die Führungsarme an ihren freien Enden jeweils mit einem Haken geformt. Der Haken ist vorzugsweise im Wesentlichen J-förmig geformt. Ein kurzer Schenkel des Hakens liegt vorzugsweise nach einer Montage des Thermostateinsatzes an einem thermostatischen Arbeitselement an und dient zu dessen Führung bei einer Hubbewegung.

Die Rückstellfeder wird durch die Führungsarme nur partiell abgestützt. Dabei ist es möglich, eine Rückstellfeder einzusetzen, welche keine geschliffenen Enden aufweist. Eine zylindrische Rückstellfeder ist in beiden Richtungen montierbar. Im Vergleich zur Verwendung von kegelförmigen Rückstellfedern ist somit die Gefahr von Montagefehlern verringerbar. Die Rückstellfedern umgeben in einer Ausgestaltung zumindest teilweise ein Gehäuse eines thermostatischen Arbeitselements. Vorzugsweise werden Rückstellfedern eingesetzt, welche einen kleinen Innendurchmesser aufweisen.

In einer weiteren Ausgestaltung wird eine Rückstellfeder, insbesondere eine im Wesentlichen zylindrische Rückstellfeder, unter Vorspannung zwischen den Grundkörper und die Führungsarme eingesetzt. Bei einer Gestaltung des Grundkörpers als Stanzteil verbleiben die Führungsarme beim Einsetzen der Rückstellfeder vorzugsweise in einer aufgespreizten Position. Die Führungsarme weisen jedoch vorzugsweise auch eine Elastizität auf. Nach dem Einsetzen eines thermostatischen Arbeitselements zusammen mit einem Ventilteller und der Rückstellfeder werden die Führungsarme unter Aufbringen einer Kraft am Umfang in Richtung einer Achse des thermostatischen Arbeitselements verformt und die Rückstellfeder entspannt. Bei einem als Kunststoffteil geformten Grundkörper weisen die Führungsarme eine Elastizität auf und werden zum Einsetzen der Rückstellfeder nach außen aufgeweitet. Nach dem Einsetzen werden die Führungsarme in ihre Endposition zurückgebracht.

Durch eine geringe Anzahl an Führungsarmen ist eine weitere Materialeinsparung möglich. Mittels drei Führungsarmen ist eine ideale Führung gewährleistet, wobei gleichzeitig ein gutes Anströmen des thermostatischen Arbeitselements gegeben ist.

In einer erfindungsgemäßen Ausgestaltung ist der Grundkörper mit den Führungsarmen als Kunststoffspritzgussteil ausgebildet. Die Wahl eines geeigneten Materials ist dabei beispielsweise von einem gewünschten Einsatz abhängig.

Vorzugsweise ist der Grundkörper einteilig mit einem Thermostathalter ausgebildet, gegen welchen sich ein stationäres Element, insbesondere eines Arbeitskolben des thermostatischen Arbeitselements abstützt. In einer Ausgestaltung ist ein Gehäuse des thermostatischen Arbeitselements an dem Thermostathalter gelagert. Bei einer Erwärmung eines in dem Gehäuse angeordneten Dehnstoffs wird ein Arbeitskolben aus dem Gehäuse ausgetrieben. In anderer Ausgestaltung stützt sich ein Arbeitskolben an dem Thermostathalter ab, wobei beim Austreiben des Arbeitskolbens das Gehäuse relativ zu dem Arbeitskolben verschoben wird.

Die Führungsarme weisen vorzugsweise an ihren Enden Haken auf, welche als Führungsteil für das thermostatische Arbeitselement dienen und eine Abstützung einer Rückstellfeder erlauben. Vorzugsweise ist eine im Wesentlichen zylindrische Rückstellfeder vorgesehen. Die Führungsarme sind dabei entsprechend geformt, um eine zylindrische Rückstellfeder aufzunehmen. In anderen Worten wird die Rückstellfeder in die Haken eingehängt und durch diesen formschlüssig gehalten. Für ein Recycling sind die Führungsarme des Grundkörpers schnell und kostengünstig demontierbar, dabei sind sämtliche Bauteile wieder verwendbar.

Nicht zuletzt wird die Aufgabe durch einen Integralthermostat umfassend einen erfindungsgemäßen Thermostateinsatz und einen Gehäusedeckel zur Aufnahme des Thermostateinsatzes gelöst.

Vorzugsweise weist der Gehäusedeckel mindestens ein Rastelement auf, so dass der Grundkörper mit dem Gehäusedeckel verrastbar ist. In einer Ausgestaltung weist der Gehäusedeckel eine Vielzahl an über den Umfang verteilten, halbkugelförmigen, zwangsentformten Rastnasen auf. Sofern keine definierte Lage eines evtl. vorgesehenen Entlüftungsventils eingehalten werden muss, ist es dabei möglich, den Thermostateinsatz ohne Ausrichtung an dem Gehäusedeckel zu montieren. Für ein Recycling sind der Thermostateinsatz und der Gehäusedeckel schnell und kostengünstig demontierbar.

In einer vorteilhaften Ausgestaltung weist der Gehäusedeckel eine koaxial zu der Aufnahmeöffnung verlaufende, ringförmige Nut zur Aufnahme einer Profildichtung auf. Mittels der Profildichtung ist eine Abdichtung gegen äußere und innere Leckage möglich. Um eine Beschädigung der Profildichtung zu vermeiden, weist der Grundkörper in Bereichen, welche in Kontakt mit der Profildichtung kommen können, vorzugsweise keine scharfen Kanten auf.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

### In den Zeichnungen zeigen:

- Fig. 1:: eine Schnittdarstellung eines Thermostateinsatzes gemäß einem ersten Ausführungsbeispiel bei geschlossenem Ventilteller;
- Fig. 2:: eine Schnittdarstellung des Thermostateinsatzes gemäß Fig. 1 bei geöffnetem Ventilteller;
- Fig. 3:: eine isometrische Darstellung des eines Thermostateinsatzes gemäß Fig. 1;
- Fig. 4:: eine Schnittdarstellung eines Thermostateinsatzes gemäß einem zweiten Ausführungsbeispiel bei geschlossenem Ventilteller;
- Fig. 5:: eine isometrische Darstellung eines Ausführungsbeispiels erfindungsgemäßen Grundkörpers gemäß Fig. 4;
- Fig. 6:: eine isometrische Darstellung eines erfindungsgemäßen Grundkörpers ähnlich Fig. 5;
- Fig. 7:: eine Schnittdarstellung eines Integralthermostats mit einem Thermostateinsatz in einem Kurzschlussbetrieb;
- Fig. 8:: eine Schnittdarstellung des Integralthermostats gemäß Fig. 7 in einem Mischbetrieb;
- Fig. 9:: eine Schnittdarstellung des Integralthermostats gemäß Fig. 7 in einem Kühlerbetrieb;
- Fig. 10:: eine isometrische Darstellung des Integralthermostats gemäß Fig. 7;
- Fig. 11:: eine Darstellung eines Details XI gemäß Fig. 7 und
- Fig. 12:: eine Darstellung eines Details XI gemäß Fig. 7 ohne Profildichtung.

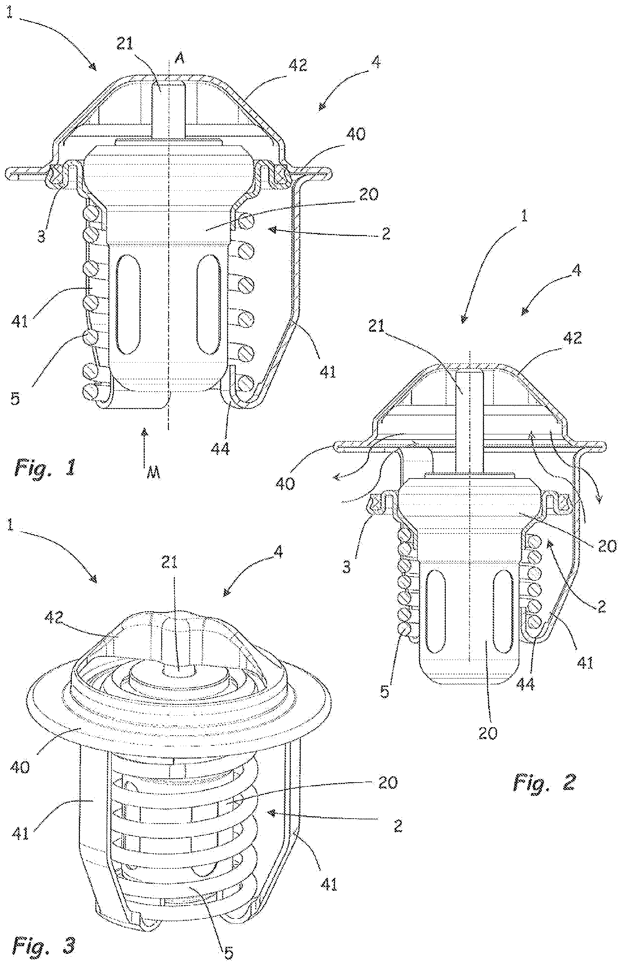

Die Fig. 1 bis 3 zeigen schematisch einen Thermostateinsatz 1 gemäß einem ersten Ausführungsbeispiel der Erfindung. Der Thermostateinsatz umfasst ein thermostatisches Arbeitselement 2 mit einem mit Dehnstoff gefüllten Gehäuse 20 und einem Arbeitskolben 21, welcher bei Erwärmung des Dehnstoffs aus dem Gehäuse 20 ausgetrieben wird, so dass das Gehäuse 20 relativ zu dem Arbeitskolben 21 verschoben wird. Mit dem Gehäuse 20 ist ein Ventilteller 3 mechanisch fest verbunden. Dabei zeigt Fig. 1 den Thermostateinsatz 1 bei geschlossenem Ventilteller 3 und Fig. 2 den Thermostateinsatz 1 bei geöffnetem Ventilteller 3, wobei das Ventil in zwei durch Pfeile dargestellte Richtungen je nach Einsatz durchströmbar ist. Fig. 3 zeigt eine isometrische Ansicht des Thermostateinsatzes 1. Der Thermostateinsatz 1 gemäß den Fig. 1 bis 3 dient beispielsweise als Drosselthermostateinsatz.

Der Thermostateinsatz 1 umfasst einen Grundkörper 4 mit einer Grundplatte 40. Über die Grundplatte 40 ist der Thermostateinsatz 1 an einem in Fig. 1 bis 3 nicht dargestellten Gehäusedeckel anbringbar. Beispielsweise ist der Grundkörper 4 zwischen einem Gehäusedeckel 7 und einem Flansch 8 eines Gehäuses anbringbar. In anderen Ausgestaltungen ist der Grundkörper 4 in einer entsprechend geformten Ausnehmung und/oder an Zapfen des Gehäusedeckels 7 anbringbar. Die Grundplatte 40 bildet weiter einen Ventilsitz für den Ventilteller 3.

Erfindungsgemäß ist der Grundkörper 4 einteilig mit mindestens zwei, in dem dargestellten Ausführungsbeispiel mit drei Führungsarmen 41 ausgebildet, wobei in Fig. 1 bis 3 jeweils nur zwei Führungsarme 41 sichtbar sind. Die Führungsarme 41 sind über den Umfang der Grundplatte 40 verteilt und vorzugsweise in einem Winkel von ca. 120° zueinander beabstandet. Die Führungsarme 41 ragen von der Grundplatte 40 ab und erstrecken sich im Wesentlichen in Axialrichtung A des Thermostateinsatzes 1.

Der Arbeitskolben 21 stützt sich gegen einen als Thermostathalter 42 geformten Abschnitt des Grundkörpers 4 ab. Der Thermostathalter 42 ist als Querbügel ausgestaltet, welcher sich über die Grundplatte 40 erstreckt. Beim Austreiben des Arbeitskolbens 21 aus dem Gehäuse 20 wird das Gehäuse 20 verschoben, so dass der Ventilteller 3 öffnet.

Die Führungsarme 41 weisen an ihren freien Enden Haken 44 auf, an welchen sich eine Schließ- oder Rückstellfeder 5 abstützt, die den Ventilteller 3 in Schließrichtung belastet.

In dem in Fig. 1 bis 3 dargestellten nicht erfindungsgemäßen Beispiel ist der Grundkörper 4 mit der Grundplatte 40, den Führungsarmen 41 und dem Thermostathalter 42 einteilig als Stanzteil aus Metall, vorzugsweise aus einem Edelstahl ausgebildet.

Bei einer Fertigung werden mehrere Grundkörper-Rohteile aus einer Materialbahn ausgestanzt. Die Grundkörper-Rohteile können zu diesem Zweck unter Materialoptimierung aus der Materialbahn ausgestanzt werden. Die Führungsarme 41 werden vorzugsweise bereits während dem Stanzen aufgespreizt, wobei die Führungsarme 41 dabei vorzugsweise zunächst - anders als in den Fig. 1 bis 3 dargestellt - nach außen abragen. Weiter werden an den freien Enden der Führungsarme 41 die Haken 44 ausgeformt. Beim Verformen des Grundkörpers 4 zum Abwinkeln der Führungsarme 41 wird vorzugsweise ein Rand oder Bund der Grundplatte 40 vollumfänglich umgebogen. Dadurch werden scharfe Kanten an dem äußeren Bund oder Rand vermieden. Eine Oberfläche der Grundplatte 40 ist aufgrund der einteiligen Ausgestaltung frei von Nieten oder ähnlichen Unebenheiten. Dadurch ist eine gute Anbringung an einem nicht dargestellten Gehäusedeckel möglich.

Zur Montage wird das thermostatische Arbeitselement 2 mit dem daran angebrachten Ventilteller 3 in einer Montagerichtung M in den Grundkörper 4 eingesetzt. Nach Einsetzen des thermostatischen Arbeitselements 2 zusammen mit einem Ventilteller 3 kann die Rückstellfeder 5 eingesetzt werden. Die Rückstellfeder 5 wird zu diesem Zweck unter Vorspannung zusammengedrückt. Nach Einsetzen der Rückstellfeder 5 werden die noch aufgespreizten Führungsarme 41 des Grundkörpers 4 in Richtung der Axialrichtung A verbogen, so dass Innenseiten der Haken 44 an dem Gehäuse 20 des thermostatischen Arbeitselements 2 wie in Fig. 1 bis 3 dargestellt anliegen. Anschließend kann eine Vorspannung der Rückstellfeder 5 gelöst und so die Montage des Thermostateinsatzes 1 abgeschlossen werden. Nach der Montage dienen die Haken 44 und die Rückstellfeder 5 einer Führung des Gehäuses 20 des thermostatischen Arbeitselements 2 bei einer Hubbewegung.

Für den gesamten Montageprozess ist eine Bestückung aus der Montageseite M möglich. Sofern eine Nachbearbeitung und/oder ein Ersatz des thermostatischen Arbeitselements 2 notwendig sein sollte, können die Führungsarme 41 nach Aushängen der Rückstellfeder 5 aus den Haken 44 wieder nach außen gebogen werden und so das thermostatische Arbeitselement 2 zusammen mit einem Ventilteller 3 aus dem Grundkörper 4 entnommen werden. Nach Ersatz eines thermostatischen Arbeitselements 2 erfolgt vorzugsweise die Montage wieder wie oben beschrieben.

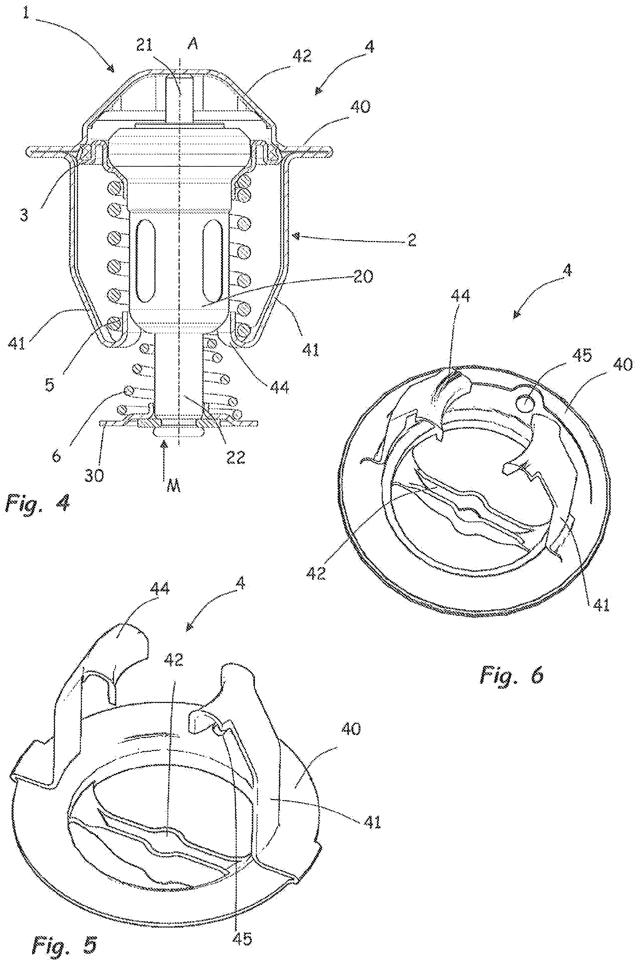

Fig. 4 zeigt eine Schnittdarstellung eines Thermostateinsatzes 1 mit einem Grundkörper 4 gemäß einem zweiten Ausführungsbeispiel bei geschlossenem Ventilteller 3. Fig. 5 zeigt eine isometrische Darstellung des Grundkörpers 4 gemäß Fig. 4 in Blickrichtung einer Montagerichtung M. Der Thermostateinsatz 1 gemäß Fig. 4 entspricht im Wesentlichen dem Thermostateinsatz 1 gemäß den Fig. 1 bis 3 und für gleiche oder ähnliche Bauteile werden einheitliche Bezugszeichen verwendet.

Im Unterschied zu dem vorangegangenen Ausführungsbeispiel umfasst der Grundkörper 4 gemäß den Fig. 4 und 5 nur zwei Führungsarme 41, welche einander gegenüberliegend an der Grundplatte 40 angeordnet sind. Die Führungsarme 41 sind in dem dargestellten Ausführungsbeispiel in gleicher Höhe mit dem Thermostathalter 42 ausgebildet. In anderen Ausgestaltungen sind der Thermostathalter 42 und die Führungsarme 41 zueinander versetzt angeordnet. Wie in Fig. 5 erkennbar, weist die Grundplatte 40 in dem dargestellten Ausführungsbeispiel eine Aufnahme 45 für ein Entlüftungsventil (nicht dargestellt) dar. Die Führungsarme 41 sind in dem dargestellten Ausführungsbeispiel bereits in eine Gebrauchsposition gebogen. Im Unterschied zu dem Grundkörper 4 gemäß Fig. 1 bis 3 ist weiter ein Rand der Grundplatte 40 lediglich partiell an den Führungsarmen 41 umgebogen. Ein derartiger Grundkörper 4 ist besonders kostengünstig fertigbar. Ein Gegenstück zur Aufnahme des Grundkörpers 4 ist vorzugsweise korrespondierend geformt. In einer anderen, nicht dargestellten Ausführungsform ist vorgesehen, dass weitere Randbereiche des Grundkörpers 4 umgebogen oder Vertiefungen an der Grundplatte 40 angebracht sind, um eine gute Anbindung zu ermöglichen.

Der Thermostateinsatz 1 gemäß Fig. 4 umfasst weiter einen Kurzschlussventilteller 30, welcher über einen koaxial zu dem Arbeitskolben 21 an einem geschlossenen Ende des Gehäuses 20 befestigten Bolzen 22 geführt ist. Zwischen dem Kurzschlussventilteller 30 und dem Boden des Gehäuses 20 ist eine Kurzschlussventilfeder 6 angeordnet. In anderen Ausgestaltungen ist für einen derartigen Thermostateinsatz 1 ein Grundkörper 4 mit drei oder mehr Führungsarmen 41 vorgesehen.

Fig. 6 zeigt einen Grundkörper 4 ähnlich dem Grundkörper 4 gemäß Fig. 5. Im Unterschied zu dem Grundkörper 4 gemäß Fig. 5 ist der Grundkörper 4 gemäß Fig. 6 als Kunststoffspritzteil ausgebildet. Die Führungsarme 41 sind dabei federnd an der Grundplatte 40 angeordnet und können zum Einsetzen eines thermostatischen Arbeitselement 2 zusammen mit einem Ventilteller 3 und einer Rückstellfeder 5 durch Aufbringen einer Zwangskraft nach außen gebogen werden. Bei Wegfall der Zwangskraft federn die Führungsarme 41 in die in Fig. 6 dargestellte Gebrauchsposition, um so eine Rückstellfeder 5 formschlüssig zu umschließen und gegen den Ventilteller 3 abzustützen.

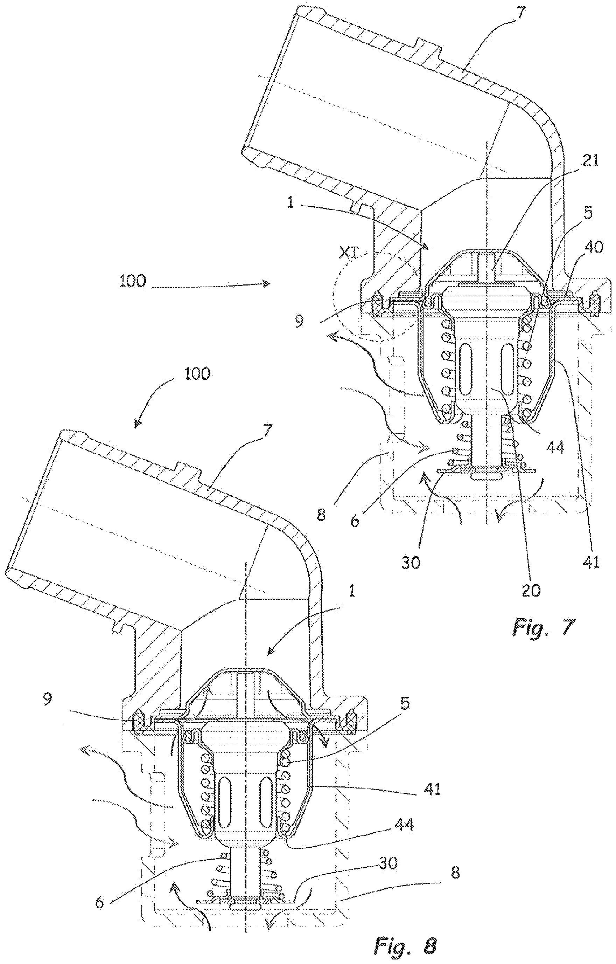

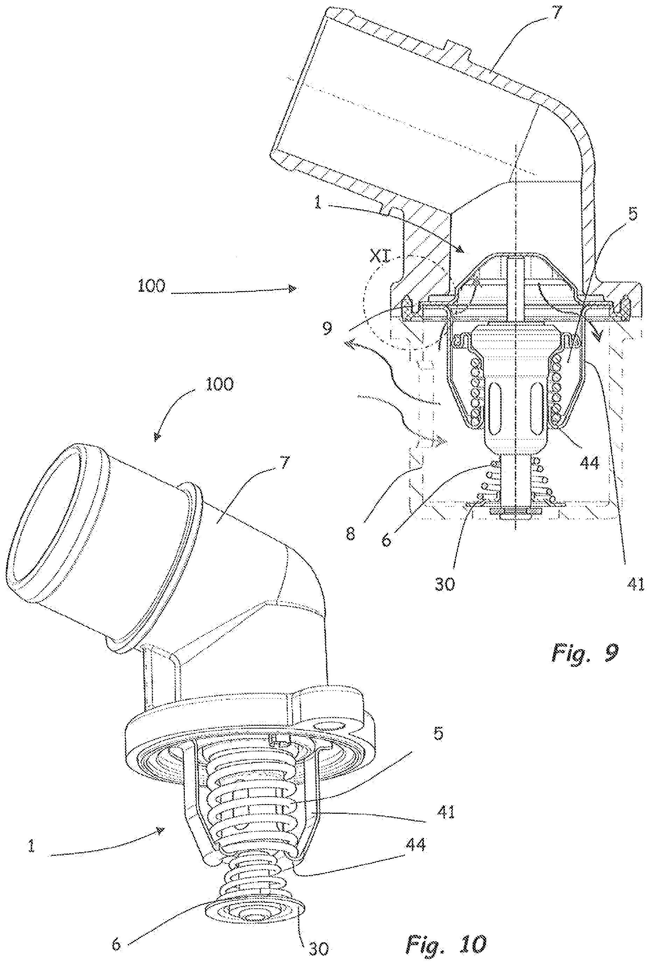

Die Fig. 7 bis 10 zeigen ein Integralthermostat 100 mit einem Thermostateinsatz 1 gemäß Fig. 4. Dabei zeigt Fig. 7 einen Kurzschlussbetrieb. Fig. 8 zeigt einen Mischbetrieb und Fig. 9 zeigt einen Kühlbetrieb. Fig. 10 zeigt den Integralthermostat 100 in einer isometrischen Darstellung. Der Integralthermostat 100 ist beispielsweise für eine Motorkühlung in einem Kraftfahrzeug einsetzbar. Dabei zeigen die Pfeile schematisch einen Kühlmittelfluss bei einer Motoreintritts- und einer Motoraustrittsregelung.

Wie in den Fig. 7 bis 9 erkennbar ist, ist der Thermostateinsatz 1 zwischen einem Gehäusedeckel 7 und einem Flansch 8 eines Gehäuses angeordnet. Der Thermostateinsatz 1 bildet dabei mit dem Gehäusedeckel 7 eine Baueinheit, welche im Zusammenhang mit der Erfindung als Integralthermostat 100 bezeichnet wird. Der Grundkörper 4 ist somit stationär an dem Gehäusedeckel 7 gelagert. Mittels der an den Führungsarmen 41 abgestützten Rückstellfeder 5 wird der Ventilteller 3 an dem durch die Grundplatte 40 gebildeten Ventilsitz gehalten, so dass ein Hauptventil geschlossen ist. Aufgrund einer Erwärmung des in dem Gehäuse 20 angeordneten Dehnstoffs wird der Arbeitskolben 21 aus dem Gehäuse 20 ausgetrieben, so dass das Gehäuse 20 entgegen der Kraft der Rückstellfeder 5 geöffnet wird. Dabei kommt es zunächst zu dem in Fig. 8 dargestellten Mischbetrieb, wobei sowohl das Hauptventil, als auch ein Kurzschlussventil teilweise geöffnet sind. Bei einer weiteren Erwärmung wird das Gehäuse 20 weiter verschoben, so dass der Kurschlussventilteller 30 mit einem an dem Flansch 8 eines Gehäuses vorgesehenen Ventilsitz zusammenwirkt und das Kurzschlussventil schließt. Mittels der Kurzschlussventilfeder 6 wird das Kurzschlussventil in der geschlossenen Stellung gehalten.

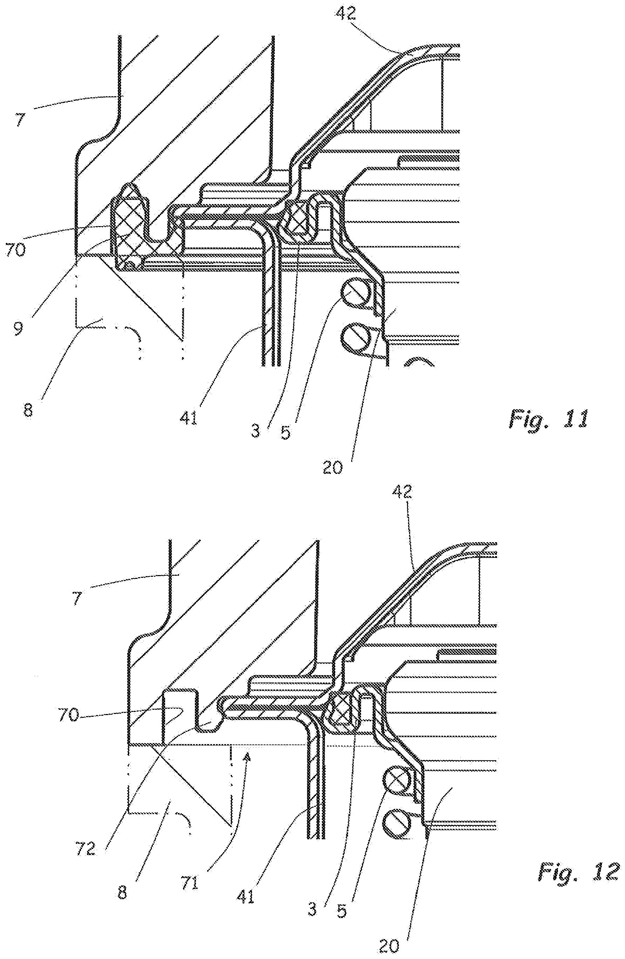

Fig. 11 zeigt ein Detail XI des Integralthermostat 100 gemäß Fig. 7. Dabei ist in Fig. 11 im Detail eine Anbringung des Grundkörpers 4 an dem Gehäusedeckel 7 erkennbar. Wie in Fig. 11 erkennbar, weist der Gehäusedeckel 7 eine konzentrisch zu dem Thermostateinsatz 1 verlaufende Ringnut 70 auf, in welche eine Profildichtung 9 eingesetzt ist. Durch die Profildichtung 9 ist dabei sowohl eine innere, als auch eine äußere Leckage vermeidbar.

Fig. 12 zeigt das Detail XI gemäß Fig. 11, wobei die Profildichtung 9 in Fig. 12 nicht dargestellt ist. Dabei ist in Fig. 12 erkennbar, dass der Gehäusedeckel 7 im Bereich einer im Wesentlichen ringförmigen Öffnung 71 zur Aufnahme des Thermostateinsatzes 1 genauer zur Aufnahme der Grundplatte 40 des Thermostateinsatzes 1, Rastnasen 72 aufweist. Durch die Rastnasen 72 kann der Thermostateinsatz 1 mit dem Gehäusedeckel 7 durch Verrasten sicher verbunden werden. Die Verbindung dient dabei in einer Ausgestaltung lediglich als Transportsicherung, wobei eine Lagerung des Grundkörpers 4 durch Zusammenwirken mit dem Flansch 8 eines Gehäuses erzielt wird.

## Patentansprüche

1. Verfahren zur Herstellung eines Thermostateinsatzes (1) mit einem thermostatischen Arbeitselement (2) und mit einem Grundkörper (4), wobei der Grundkörper (4) mit einer an einem Gehäusedeckel (7) anordenbaren, einen Ventilsitz bildenden Grundplatte (40), ausgebildet ist, wobei der Grundkörper (4) einteilig mit mehreren, vorzugsweise zwei oder drei von der Grundplatte (40) abragenden Führungsarmen (41) hergestellt wird und wobei eine an den Führungsarmen (41) abgestützte Rückstellfeder (5), wie eine im Wesentlichen zylindrische Rückstellfeder (5), vorgesehen ist, **dadurch gekennzeichnet, dass** durch die abragenden Führungsarme (41) ein bewegtes Element, insbesondere ein Gehäuse (20) eines thermostatischen Arbeitselements (2), bei einer Hubbewegung führbar ist, wobei der Grundkörper (4) als Kunststoffspritzgussteil hergestellt wird.

2. Verfahren nach Anspruch 1, **dadurch gekennzeichnet, dass** an freien Enden der Führungsarme (41) jeweils ein Haken (44) ausgeformt wird.

3. Verfahren zur Herstellung eines Thermostateinsatzes (1), **dadurch gekennzeichnet, dass** ein einteiliger Grundkörper (4) mit Grundplatte (40) und Führungsarmen (41) gemäß einem Verfahren nach einem der Ansprüche 1 oder 2 hergestellt wird und ein thermostatisches Arbeitselement (2) mit einem daran angeordneten Ventilteller (3) und eine Rückstellfeder (5), wie eine im Wesentlichen zylindrische Rückstellfeder (5), zwischen der Grundplatte (40) und den Führungsarmen (41) eingesetzt wird.

4. Verfahren nach Anspruch 3, **dadurch gekennzeichnet, dass** die Rückstellfeder (5) unter Vorspannung zwischen den Führungsarmen (41) und dem mit dem thermostatischen Arbeitselement (2) verbundenen Ventilteller (3) eingesetzt wird.

5. Thermostateinsatz (1) mit einem thermostatischen Arbeitselement (2) und mit einem Grundkörper (4), wobei der Grundkörper (4) mit einer zwischen einem Gehäusedeckel (7) und einem Flansch (8) eines Gehäuses anordenbaren, einen Ventilsitz bildenden Grundplatte (40) ausgebildet ist, wobei der Grundkörper (4) einteilig mit mehreren, vorzugsweise zwei oder drei von der Grundplatte (40) abragenden Führungsarmen (41) ausgebildet ist und wobei eine an den Führungsarmen (41) abgestützte Rückstellfeder (5), wie eine im Wesentlichen zylindrische Rückstellfeder (5), vorgesehen ist, **dadurch gekennzeichnet, dass** durch die abragenden Führungsarme (41) ein bewegtes Element, insbesondere ein Gehäuse (20) des thermostatischen Arbeitselements (2), bei einer Hubbewegung führbar ist, wobei der Grundkörper (4) mit den Führungsarmen (41) als Kunststoffspritzgussteil ausgebildet ist.

6. Thermostateinsatz nach Anspruch 5, **dadurch gekennzeichnet, dass** der Grundkörper (4) einteilig mit einem Thermostathalter (42) ausgebildet ist, gegen welchen sich ein stationäres Element insbesondere ein Arbeitskolben (21) des thermostatischen Arbeitselements (2) abstützt.

7. Thermostateinsatz nach Anspruch 5 oder 6, **dadurch gekennzeichnet, dass** die Führungsarme (41) an ihren freien Enden jeweils einen Haken (44) aufweisen.

8. Integralthermostat umfassend einen Thermostateinsatz (1) nach Anspruch 5, 6 oder 7 und einen Gehäusedeckel (7) zur Aufnahme des Thermostateinsatzes (1).

9. Integralthermostat nach Anspruch 8, **dadurch gekennzeichnet, dass** der Gehäusedeckel (7) mindestens ein Rastelement (72) aufweist, so dass der Grundkörper (4) mit dem Gehäusedeckel (7) verrastbar ist.

10. Integralthermostat nach Anspruch 8 oder 9, **dadurch gekennzeichnet, dass** der Gehäusedeckel (7) eine koaxial zu dem Thermostateinsatz (1) verlaufende, ringförmige Nut (70) zur Aufnahme einer Profildichtung (9) für eine innere und äußere Leckage aufweist.

## Claims

1. A method for producing a thermostat insert (1) with a thermostatic work element (2) and with a base body (4), wherein the base body (4) is formed with a base plate (40) which forms a valve seat and which can be arranged on a housing lid (7), wherein the base body (4) is produced in one piece with several, preferably two or three guide arms (41) which protrude from the base plate (40) and wherein a return spring (5), such as a substantially cylindrical return spring (5), which is supported on the guide arms (41) is provided, **characterised in that** a moved element, in particular a housing (20) of a thermostatic work element (2), can be guided through the protruding guide arms (41) in case of a lifting movement, wherein the base body (4) is produced as a plastic injection moulded part.

2. The method according to claim 1, **characterised in that** a respective hook (44) is formed on free ends of the guide arms (41).

3. The method for producing a thermostat insert (1), **characterised in that** a one-piece base body (4) with a base plate (40) and guide arms (41) is produced according to a method according to one of claims 1 or 2 and a thermostatic work element (2) with a valve disc (3) arranged thereon and a return spring (5), such as a substantially cylindrical return spring (5), is inserted between the base plate (40) and the guide arms (41).

4. The method according to claim 3, **characterised in that** the return spring (5) under pretension is inserted between the guide arms (41) and the valve disc (3) which is connected to the thermostatic work element (2).

5. A thermostat insert (1) with a thermostatic work element (2) and with a base body (4), wherein the base body (4) is formed with a base plate (40) which forms a valve disc and which can be arranged between a housing lid (7) and a flange (8) of a housing, wherein the base body (4) is formed in one piece with several, preferably two or three guide arms (41) which protrude from the base plate (40) and wherein a return spring (5), such as a substantially cylindrical return spring (5), which is supported on the guide arms (41) is provided, **characterised in that** a moved element, in particular a housing (20) of the thermostatic work element (2), can be guided through the protruding guide arms (41) in case of a lifting movement, wherein the base body (4) with the guide arms (41) is formed as a plastic injection moulded part.

6. The thermostat insert according to claim 5, **characterised in that** the base body (4) is formed in one piece with a thermostat holder (42) which supports a stationary element, in particular a working piston (21) of the thermostatic work element (2) .

7. The thermostat insert according to claim 5 or 6, **characterised in that** the guide arms (41) each have a hook (44) on their free ends.

8. An integral thermostat, comprising a thermostat insert (1) according to claim 5, 6 or 7 and a housing lid (7) for receiving the thermostat insert (1).

9. The integral thermostat according to claim 8, **characterised in that** the housing lid (7) has at least one engagement element (72) so that the base body (4) and the housing lid (7) can engage one another.

10. The integral thermostat according to claim 8 or 9, **characterised in that** the housing lid (7) has a ringshaped groove (70) which runs coaxially to the thermostat insert (1) for receiving a profile seal (9) for an inner and outer leakage.

## Revendications

1. Procédé de fabrication d'un insert thermostatique (1) doté d'un élément de travail (2) thermostatique et d'un corps de base (4), où le corps de base (4) est conçu en comportant une plaque de base (40) pouvant être disposée sur un couvercle de boîtier (7) et formant un siège de soupape, où le corps de base (4) est fabriqué en formant une seule et même pièce avec plusieurs - de préférence deux ou trois - bras de guidage (41) faisant saillie par rapport à la plaque de base (40), et où il est prévu un ressort de rappel (5) supporté sur les bras de guidage (41), tel qu'un ressort de rappel (5) pratiquement cylindrique, **caractérisé en ce qu'**un élément déplacé par les bras de guidage (41) faisant saillie, en particulier un boîtier (20) d'un élément de travail (2) thermostatique, peut être guidé au cours d'un mouvement de levée, où le corps de base (4) est fabriqué comme une pièce en matière plastique moulée par injection.

2. Procédé selon la revendication 1, **caractérisé en ce qu'**un crochet (44) est formé à chaque fois au niveau d'extrémités libres des bras de guidage (41).

3. Procédé de fabrication d'un insert thermostatique (1), **caractérisé en ce qu'**un corps de base monobloc (4) doté d'une plaque de base (40) et de bras de guidage (41) est fabriqué conformément à un procédé selon l'une des revendications 1 ou 2, et un élément de travail (2) thermostatique doté d'une tête de soupape (3) disposée sur ledit élément de travail et un ressort de rappel (5), tel qu'un ressort de rappel (5) pratiquement cylindrique, sont insérés entre la plaque de base (40) et les bras de guidage (41).

4. Procédé selon la revendication 3, **caractérisé en ce que** le ressort de rappel (5) est inséré sous l'effet d'une précontrainte s'exerçant entre les bras de guidage (41) et la tête de soupape (3) reliée à l'élément de travail (2) thermostatique.

5. Insert thermostatique (1) doté d'un élément de travail (2) thermostatique et d'un corps de base (4), où le corps de base (4) est conçu en comportant une plaque de base (40) pouvant être disposée entre un couvercle de boîtier (7) et une bride (8) d'un boîtier et formant un siège de soupape, où le corps de base (4) est fabriqué en formant une seule et même pièce avec plusieurs - de préférence deux ou trois - bras de guidage (41) faisant saillie par rapport à la plaque de base (40), et où il est prévu un ressort de rappel (5) supporté sur les bras de guidage (41), tel qu'un ressort de rappel (5) pratiquement cylindrique, **caractérisé en ce qu'**un élément déplacé par les bras de guidage (41) faisant saillie, en particulier un boîtier (20) de l'élément de travail (2) thermostatique, peut être guidé au cours d'un mouvement de levée, où le corps de base (4) doté des bras de guidage (41) est conçu comme une pièce en matière plastique moulée par injection.

6. Insert thermostatique selon la revendication 5, **caractérisé en ce que** le corps de base (4) est conçu en formant une seule et même pièce avec un support de thermostat (42) contre lequel vient en appui un élément stationnaire, un particulier un piston de travail (21) de l'élément de travail (2) thermostatique.

7. Insert thermostatique selon la revendication 5 ou 6, **caractérisé en ce que** les bras de guidage (41) présentent à chaque fois un crochet (44) formé au niveau des extrémités libres desdits bras de guidage.

8. Thermostat intégré comprenant un insert thermostatique (1) selon la revendication 5, 6 ou 7, et comprenant un couvercle de boîtier (7) servant au logement de l'insert thermostatique (1).

9. Thermostat intégré selon la revendication 8, caractérisé en que le couvercle de boîtier (7) présente au moins un élément d'encliquetage (72), de sorte que le corps de base (4) peut être assemblé par encliquetage avec le couvercle de boîtier (7).

10. Thermostat intégré selon la revendication 8 ou 9, caractérisé en que le couvercle de boîtier (7) présente une gorge annulaire (70) s'étendant de façon coaxiale par rapport à l'insert thermostatique (1) et servant au logement d'un joint d'étanchéité profilé (9) pour une fuite se produisant à l'intérieur et à l'extérieur.
